# FASCICULE DE BREVET EUROPEEN

(11) **EP 2 655 541 B1**
(45) Date de publication et mention de la délivrance du brevet: **11.02.2015**
(21) Numéro de dépôt: 11811098.0
(22) Date de dépôt: 13.12.2011
(51) Int. Cl.: C09K 8/38, C09K 8/52, C09K 8/70

(54) **NOUVEAU PROCÉDÉ DE FORAGE DE CAVITÉS SOUTERRAINES**
NEUARTIGES VERFAHREN ZUM BOHREN VON UNTERIRDISCHEN HOHLRÄUMEN
NOVEL PROCESS FOR DRILLING SUBTERRANEAN CAVITIES

(30) Priorité: 23.12.2010 FR 1061141
(43) Date de publication de la demande: 30.10.2013
(73) Titulaire: Societe D'Exploitation De Produits Pour Les Industries Chimiques Seppic, 75007 Paris (FR)
(72) Inventeur: GAYRAL CHIRAC, Marie-Françoise, F-81290 Viviers-les-montagnes (FR); GUILBOT, Jerôme, F-81100 Castres (FR); BENATTAR, André, F-81100 Castres (FR)
(74) Mandataire: Conan, Philippe Claude
(86) Numéro de dépôt international: PCT/FR2011/052960
(87) Numéro de publication internationale: WO 2012/085391

(56) Documents cités:
- WO-A1-03/035794
- FR-A1- 2 690 709
- FR-A1- 2 757 426
- FR-A1- 2 913 350

## Description

La présente invention concerne un procédé de forage de cavités dans des formations souterraines, mettant en oeuvre une étape d'évacuation des déblais de forage au moyen d'une de mousses.

Les procédés de forage de cavités dans des formations souterraines, dans des directions verticales ou en oblique, comme par exemple les procédés de forage de puits de pétrole, de puits de gaz, de puits d'eau, de puits miniers, ou dans des directions horizontales, comme par exemple les procédés de forage de tunnels ou de galeries minières, mettent en oeuvre des étapes d'évacuation des déblais de forage de mousses aqueuses obtenues par activation d'un agent tensioactif moussant en solution aqueuse. Ces mousses présentent l'avantage de constituer un bon support pour les déblais, de pas induire une pression de fond trop importante grâce à faibles masses volumiques, ce qui limite ainsi les risques d'endommagement de la formation souterraine.

Dans le cas des procédés de forage de cavités dans des formations souterraines selon des directions horizontales, comme par exemple les procédés de forage de tunnels ou de galeries minières, on utilise couramment des machines dénommées tunneliers, qui sont capables de forer un tunnel ou une galerie dont le diamètre correspond à un proche du diamètre final de l'ouvrage à réaliser. Ces procédés de forage, et notamment les procédés de forage utilisant des tunneliers à confinement destinés à opérer dans des terrains de tenues médiocres (comme par exemple les terrains alluvionnaires, les sables et les argiles) ou aquifères, mettent en oeuvre des mousses aqueuses pour fluidifier les déblais de forage et pour permettre leur évacuation de la zone de forage. Ces procédés de forage permettent également d'améliorer la perméabilité du terrain, et par conséquent de réduire l'intensité des forces de friction s'exerçant sur la machine de forage et donc de ralentir l'usure de ladite machine de forage.

Les mousses mises en oeuvre dans ces procédés doivent être très stables et avoir une capacité de rupture importante, ceci pour limiter la quantité utilisée, permettre une séparation efficace des déblais lors du retour à la surface, et d'une solution aqueuse susceptible d'être réactiver en mousse pour une nouvelle opération de forage.

Le cassage de la mousse au retour à la surface est effectué, soit par l'ajout d'agents démoussants, soit par la modification du pH de la mousse aqueuse. Dans ce dernier cas, si la mousse est basique ou neutre, elle est cassée en diminuant le pH à une valeur inférieure ou égale à 4,5 par ajout d'un agent acide en solution aqueuse; ou en augmentant la valeur du pH jusqu'à au moins 9,5 par ajout d'un agent alcalin en solution aqueuse.

Les mousses sont constituées par un ensemble de cellules gazeuses séparées par des lames minces de liquides, formées par la juxtaposition de bulles que génère un gaz dispersé dans un liquide. Elles sont généralement préparées à partir de compositions aqueuses comprenant au moins un agent tensioactif moussant par mélange d'un gaz, comme par exemple l'air ou l'azote ou le gaz carbonique. Certains agents tensioactifs sont connus pour générer des mousses par mélange avec des gaz. Cependant, les propriétés mécaniques de ces mousses sont différentes selon la nature desdits agents tensioactifs. Ainsi pour obtenir des mousses d'une grande stabilité, qui se caractérisent par une viscosité de mousse et une durée élevées, l'homme du métier doit combiner l'agent tensioactif avec un ou plusieurs additifs ayant pour effet d'augmenter la rigidité de la structure des cellules gazeuses.

La demande de brevet français publiée sous le numéro 2 439 230 divulgue l'utilisation d'amines grasses comme auxiliaire de moussage, de solutions aqueuses de tensioactifs tels que les alkylbétaines, les alkylamidobétaines, les alkylsulfates ou les alkyléthers sulfates.

La demande internationale de publiée sous le numéro WO 93/22538 A1 décrit un procédé d'excavation de tunnel se caractérisant par l'injection d'une mousse à l'avant du disque de coupe ou de la chambre de confinement de la machine de forage, générée par activation d'un agent tensioactif moussant en solution aqueuse en présence d'un auxiliaire de moussage choisi dans le groupe constitué par les aminés grasses, les alcools gras, les alcanol amides gras ou les amino-oxydes tertiaires.

La demande internationale publiée sous le numéro WO03/035794 A1 décrit une méthode de forage de puits comportant une étape d'évacuation des déblais de forage au moyen d'un fluide de forage aqueux tel qu'une mousse comprenant un agent de moussage comprenant au moins un phosphate de monoalkyle gras optionnellement poly-éthoxylé, permettant alors de générer la mousse dans des conditions peu acides ou alcalines et de la détruire dans des conditions acides. WO03/035794 A1 enseigne également l'augmentation de la stabilité de la mousse obtenue par l'emploi d'au moins un mono-ester phosphate d'hydrocarbyle aliphatique par l'ajout d'un agent stabilisateur de mousse.

Cependant, ces additifs stabilisateurs de la mousse, sont souvent peu biodégradables et parfois toxiques, ce qui les rend non-conformes aux nouvelles dispositions réglementaires en matière d"environnement.

Ils sont de plus inutilisables dans des zones géologiques sensibles, comme par exemple celles renfermant des nappes phréatiques d'eau potable, ou des zones géographiques protégées.

La demande de brevet américain publiée sous le numéro US 2008/00111486 divulgue l'utilisation de mousse de solutions aqueuses d'alkyl polyglucosides, qui sont des tensioactifs biodégradables pour les opérations de forages de puits. Cependant les mousses générées par ces tensioactifs ne présentent pas des propriétés mécaniques et de stabilité suffisamment satisfaisantes.

La demanderesse s'est attachée à développer une solution technique nouvelle concernant un procédé de forage comprenant une étape d'évacuation de déblais mettant en oeuvre une mousse obtenue par activation d'un aminoacide N-acylé le groupe acyle étant dérivé d'un acide gras sans ajout d'additif stabilisant, et permettant ainsi de pallier aux inconvénients exposés ci-dessus.

C'est pourquoi l'invention a pour objet un procédé de forage de cavités dans des formations souterraines comprenant une étape d'évacuation des déblais de forage mettant en oeuvre un fluide aqueux, sous forme d'une mousse, obtenu par mélange :
- D'une composition aqueuse (C₁) comprenant pour 100% massique :
   - De 0,5% massique à 25% massique d'un composé de formule (I) :

      R₁-C(O)-NH-CH(COOM)-(CH₂)ₙ-COOM' (I)

      dans laquelle n représente un nombre entier égal à 1 ou 2, R₁ représente un radical hydrocarboné aliphatique, linéaire ou ramifié, saturé ou insaturé, comportant de huit à dix-huit atomes de carbone, M représente un cation monovalent et M', identique à, ou différent de M, représente un atome d'hydrogène ou un cation monovalent ; ou d'un mélange de composés de formule (I), et
   - De 75% à 99,5% massique d'eau,
- Avec un gaz ou un mélange de gaz, choisi parmi l'air, l'azote ou dioxyde de carbone.

Dans le procédé tel que défini ci-dessus, le fluide aqueux est généralement préparé au niveau de la tête de puits par mélange de ladite composition aqueuse (C₁) et le gaz ou le mélange de gaz, au moyen d'un dispositif adapté et disponible dans le commerce. La mousse ainsi obtenue est alors acheminée dans le puits par pompage à l'intérieur de tubes, réunis en une colonne qui est descendue dans le puits au niveau de la zone de forage, pour être injectée dans cette zone de forage, généralement au milieu de la garniture de forage. Le retour de la mousse à la surface s'effectue à travers un espace annulaire défini par les tubes précédemment décrits et par les parois du puits, en entrainant les déblais de forage vers la surface. Les déblais sont ensuite séparés de la mousse pour être évacués.

Selon un aspect particulier du procédé tel que défini précédemment, la composition aqueuse (C₁) comprend pour 100% massique, de 0,5% massique à 15% massique d'un composé de formule (I) telle que définie ci-dessus, ou d'un mélange de composés de formule (I), et de 85% à 99% massique d'eau.

Selon un aspect plus particulier du procédé tel que défini précédemment, la composition aqueuse (C₁) comprend pour 100% massique, de 0,5% massique à 5% massique d'un composé de formule (I) telle que définie ci-dessus, ou d'un mélange de composés de formule (I), et de 95% à 99,5% massique d'eau.

Selon un aspect particulier du procédé tel que défini précédemment, dans la formule (I), n est égal à 1.

Selon un autre aspect particulier du procédé tel que défini précédemment, dans la formule (I), n est égal à 2.

Selon un aspect particulier du procédé tel que défini précédemment, la composition aqueuse (C₁) comprend une proportion non nulle d'au moins un composé de formule (I), dans laquelle n est égal à 1 et une proportion non nulle d'au moins un composé de formule (I), dans laquelle n est égal à 2.

Dans le procédé tel que défini précédemment, le composé de formule (I) telle que définie ci-dessus, peut se présenter sous forme partiellement ou totalement salifiée.

Lorsque le composé de formule (I) est sous forme partiellement salifiée, M représente un cation monovalent et M' représente un atome d'hydrogène.

Lorsque le composé de formule (I) est sous forme totalement salifiée, M et M', identiques ou différents, représentent un cation monovalent.

Par cation monovalent, on désigne pour M et/ou M' sont sélectionnés un cation choisi parmi l'ion ammonium, un cation monovalent de métaux alcalins, comme par exemple le cation sodium, potassium, ou lithium, un cation monovalent d'un alcanolamine, par exemple le cation (2-hydroxy éthyl) ammonium, le cation bis(2-hydroxy éthyl) ammonium, le cation tris(2-hydroxy éthyl) ammonium, le cation ammonium du monoisopropanolamine, le cation ammonium du 2(2-aminoethoxy) éthanol, le cation ammonium du 2(2-aminoéthylamino) éthanol ou le cation ammonium du 2-(méthylamino) éthanol.

Selon un aspect particulier du procédé tel que défini précédemment, dans la formule (I), M représente un atome de sodium ou de potassium et M' représente un atome d'hydrogène.

Selon un autre aspect particulier du procédé tel que défini précédemment, dans la formule (I), M et M' représentent un atome de sodium ou un atome de potassium.

Les composés de formules (I) tels que décrits précédemment sont généralement obtenus par N-acylation des acides aminés correspondants ou de leurs sels.

La réaction d'acylation est connue de l'homme du métier. Elle est décrite par exemple dans la demande internationale publiée sous le numéro WO 98/09611. Elle est mise en oeuvre indifféremment sur un acide aminé ou sur un mélange d'acides aminés. L'agent d'acylation consiste généralement en un dérivé activé d'un acide carboxylique de formule :

R₁-C(=O)-OH,

dans laquelle R₁ est tel que défini précédemment, tel qu'un anhydride symétrique de cet acide, l'ester méthylique de cet acide, ou un halogénure d'acide comme le chlorure d'acide ou le bromure d'acide. Il peut aussi consister en un mélange de dérivés activés d'acides carboxyliques issus d'huiles ou graisses naturelles d'origine animales ou végétales telles que les huiles de coprah, de noix de coco, de palmiste, de palme, de soja, de colza, de maïs, le suif de boeuf, l'huile spermaceti ou l'huile de hareng. Dans le cadre de la présente invention on utilise de préférences les mélanges d'acides gras issus de l'huile de coprah, de l'huile de palmiste, de l'huile de noix de coco ou de l'huile de spermaceti qui contiennent une fraction majoritaire en acide dodécanoïque, dont les compositions sont décrites dans le tableau ci-dessous (en pourcentages massiques):

| | huile de coprah | huile de palmiste | huile de spermaceti | huile de noix de coco |
|---|---|---|---|---|
| acide octanoïque ou caprylique (CₐH₁₆O₂) | 6% à 9% | 3% à 10% | - | 2% à 10% |
| acide décanoïque ou caprique (C₁₀H₂₀O₂) | 6% à 10% | 3% à 14% | 1%à3% | 3% à 9% |
| acide dodécanoïque ou laurique (C₁₂H₂₄O₂) | 44% à 51% | 37% à 52% | 14% à 38% | 45% à 56% |
| acide tétradécanoïque ou myristique (Cₗ₄H₂₈O₂) | 13% à 18% | 7% à 17% | 12% à 14% | 15% à 23% |
| acide hexadécanoïque ou palmitique (C₁₆H₃₂O₂) | 8% à 10% | 2% à 9% | 8% à 10% | 7% à 14% |
| acide octadécanoïque ou stéarique (C₁₈H₃₆O₂) | 1%à3% | 1%à3% | 1%à3% | 1%à7% |
| acide octadécénoïque ou oléique (C₁₈H₃₄O₂) | 5,5% à 7,5% | 11% à 23% | 15% à 18% | 3% à 11% |
| acide eicosénoïque ou gadolique (C₂₀H₃₈O₂) | - | - | 5% à 8% | - |
| Acide octadécadiénoïque ou linoléique (C₁₈H₃₂O₂) | < 2,5% | 1%à3% | - | ≤ 3% |
| autres acides | < 0,4% | < 0, 6% | 26% à 34% | < 3% |

Selon un aspect particulier de la présente invention, celle-ci a pour objet un procédé tel que défini précédemment, caractérisé en ce que dans la formule (I), le radical R₁ représente un radical alkyle choisi parmi les radicaux heptyle, nonyle, undécyle, tridécyle ou pentadécyle et plus particulièrement le procédé pour lequel la composition aqueuse (C₁) comprend pour 100% massique :
- De 0,5% massique à 25% massique d'un mélange de composés de formule (I) :

   R₁-C(O)-NH-CH(COOM)-(CH₂)ₙ-COOM' (I)

   obtenu par acylation d'un composé de formule (II) :

   NH₂-CH(COOM)-(CH₂)ₙ-COOM' (II)

   dans laquelle n représente un nombre entier égal à 1 ou 2, M représente un cation monovalent et M', identique à, ou différent de M, représente un atome d'hydrogène ou un cation monovalent, avec un mélange d'acides gras issus de l'huile de coco ou par un mélange de dérivés activés des dits acides ; et
- De 75% à 99,5% massique d'eau.

Selon un autre aspect, le procédé tel que défini précédemment est caractérisé en ce que le mélange de composés de formule (I) est choisi parmi le mono-sel de sodium ou de potassium de l'acide N-cocoyl glutamique, ou le mono-sel de sodium ou de potassium de l'acide N-cocoyl aspartique, ou en ce que le mélange de composés de formule (I) est choisi parmi le di-sel de sodium ou de potassium de l'acide N-cocoyl glutamique, ou le di-sel de sodium ou de potassium de l'acide N-cocoyl aspartique.

Selon un autre aspect du procédé tel que défini précédemment, la composition aqueuse (C₁) comprend en outre, pour 100% de sa masse, de 0,5% massique à 15% massique et plus particulièrement de 0,5% massique à 10% massique d'au moins un tensioactif différent du composé de formule (I), choisi parmi les tensioactifs non-ioniques, les tensioactifs anioniques, les tensioactifs cationiques et les tensioactifs amphotères.

Parmi les tensioactifs non ioniques compris dans la composition aqueuse (C₁), on citera particulièrement les alkylpolyglycosides, les dérivés alcoxylés d'huile de ricin, les esters de sorbitan, les esters de manitan, les esters de sorbitan alcoxylés comme par exemple les esters de sorbitan éthoxylés, les esters de manitan alcoxylés comme par exemple les esters de manitan éthoxylés, les amides de coprah, les N-alkylamines, les oxydes d'amines, les copolymères blocs d'oxyde d'éthylène et d'oxyde de propylène, et tout particulièrement les copolymères blocs d'oxyde d'éthylène et d'oxyde de propylène commercialisés sous le nom de marque PLURONIC™ par la société BASF, comme par exemple le PLURONIC™PE 6100 et le PLURONIC™PE 6200 , les tensioactifs non-ionique de formule (II) :

R-(O-CH(R')CH₂)ₙ-(O-CH₂-CH₂)ₘ-O-H (II)

dans laquelle R représente un radical aliphatique hydrocarboné, saturé ou insaturé, linéaire ou ramifié, comportant de 8 à 36 atomes de carbone, R' représente un radical méthyl ou éthyl, n représente un nombre entier supérieur ou égal à 0 et inférieur ou égal à 150, m représente un nombre entier supérieur ou égal à 0 et inférieur ou égal à 150, étant entendu que la somme n + m est supérieure à zéro, les tensioactifs non ioniques démoussant de formule (A₁) :

R'₁-X-[(CH₂-CH(CH₃)O))u-(CH₂-CH₂-O)v-Y]w (A₁)

dans laquelle :
- R'₁ représente un radical aliphatique hydrocarboné, saturé ou insaturé, linéaire ou ramifié, comportant de 6 à 18 atomes de carbone,
- X représente un atome d'azote ou un atome d'oxygène,
- v représente un nombre entier compris entre 1 et 50,
- u représente un nombre entier compris entre 1 et 50,
- w représente un nombre entier égal à 1 si X représente un atome d'oxygène, et w représente un nombre entier égal à 1 ou 2 si X représente un atome d'azote.
- Y représente un groupe fonctionnel bloquant choisi parmi les éléments du groupe constitué par les radicaux alkyles linéaires comportant de 4 à 8 atomes de carbone, comme par exemple le radical butyle, le radical benzyle, un groupe oxyde de butylène.

Parmi les tensioactifs non ioniques démoussants de formule (A₁), on peut citer les produits commercialisés sous le nom de marque TERGITOL™ par la société DOW CHEMICAL comme par exemple le TERGITOL™ L61 E et le TERGITOL™ L64E.

Parmi les tensioactifs anioniques compris dans la composition aqueuse (C₁), on citera particulièrement les sels de métaux alcalins, les sels de métaux alcalino-terreux, les sels d'ammonium, les sels d'amines, les sels d'aminoalcools des composés suivants : les alkyléthers sulfates, les alkylsulfates, les alkylamidoéthersulfates, les alkylarylpolyéthersulfates, les monoglycérides sulfates, les alpha-oléfinesulfonates, les paraffines sulfonates, les alkylphosphates, les alkylétherphosphates, les alkylsulfonates, les alkylamidesulfonates, les alkylarylsulfonates, les alkylcarboxylates, les alkylsulfosuccinates, les alkyléthersulfosuccinates, les alkylamidesulfosuccinates, les alkylsulfoacétates, les alkylsarcosinates, les acyliséthionates, les N-acyltaurates, les acyllactylates. Parmi les tensioactifs anioniques, on citera également les lipoaminoacides autres que ceux de formule (I) telle que définie précédemment, par exemple, les lipoprotéines, les lipopeptides, les dérivés des lipoprotéines, les dérivés de protéines, les sels d'acides gras, les sels d'acides d'huile de coprah éventuellement hydrogénée.

Parmi les tensioactifs amphotères compris dans la composition aqueuse (C₁), on citera particulièrement les alkylbétaines, les alkylamidobétaines, les sultaines, les alkylamidoalkylsulfobétaines, les dérivés d'imidazolines, les phosphobétaïnes, les amphopolyacétates et les amphopropionates.

Parmi les tensioactifs cationiques compris dans la composition aqueuse (C₁), on citera particulièrement les dérivés d'ammoniums quaternaires.

Selon un aspect plus particulier de la présente invention, celle-ci a pour objet le procédé tel que défini précédemment, pour lequel la composition aqueuse (C₁), comprend en outre au moins un tensioactif choisi parmi:
- Les alkylpolyglycosides de formule (A₂) :

   R₂-O-(S)_{q}-H (A₂)

   dans laquelle S représente le reste d'un sucre réducteur choisis parmi les éléments du groupe constitué par le glucose, le xylose et l'arabinose, R₂ représente un radical hydrocarboné saturé, linéaire ou ramifié, comportant de 8 à 16 atomes de carbone et q représente un nombre décimal supérieur ou égal à 1,05 et inférieur ou égal à 5 ;
- Les alkyléthers sulfates de formule (A₃) :

   [R₃-O-(CH₂-CH₂-O)ₚ-SO₃]ᵣZ (A₃)

   dans laquelle R₃ représente un radical hydrocarboné aliphatique, saturé ou insaturé, linéaire ou ramifié, comportant de 6 à 22 atomes de carbone, p représente un nombre décimal compris entre 1 et 10, de préférence entre 2 et 4, r est un nombre entier égal à 1 ou à 2 et Z représente le cation d'un métal alcalin ou d'un métal alcalino-terreux, l'ion ammonium, l'ion hydroxyéthyl ammonium, l'ion tri(hydroxyéthyl) ammonium.
- Les N-acylglycine de formule (A₄)

   R₄-C(O)-NH-CH₂-COOH (A₄)

   dans laquelle le radical R₄-(C=O)- représente un radical choisi parmi les radicaux n-octanoyle, n-décanoyle, n-dodécanoyle, n-tétradécanoyle, n-hexadécanoyle, n-octadécanoyle et cocoyle. De façon plus particulière, les N-acylglycine de formule (A₄) sont le dodécanoylglycine et le cocoylglycine.

Selon cet aspect particulier, le procédé tel que défini précédemment la proportion massique totale en dit tensioactif différent du composé de formule (I) est plus particulièrement inférieure à la proportion massique totale en dit composé de formule (I).

Selon un aspect particulier du procédé tel que défini précédemment, la composition aqueuse (C₁) comprend en outre, pour 100% de sa masse, de 0,5% massique à 10% massique de N-cocoyl glycine ou de N - dodécanoyl glycine.

La composition aqueuse (C₁) mise en oeuvre dans le procédé objet de la présente invention, comporte optionnellement des ingrédients habituellement mis en oeuvre dans le domaine des procédés de forage comme des solvants, des modificateurs de rhéologie, des inhibiteurs d'argile destinés à inhiber le gonflement des argiles au contact de l'eau, des agents lubrifiants.

Comme exemple de solvants optionnellement présents dans la composition aqueuse (C₁), mise en oeuvre dans le procédé objet de la présente invention, il y a le glycérol, le dipropylène glycol, l'hexylène glycol, le 1-2 propanediol, 1,3 propylène glycol, le mono propylène glycol, le DMSO ou les polyosides liquides.

Comme exemple de modificateurs de rhéologie optionnellement présents dans la composition aqueuse (C₁), mise en oeuvre dans le procédé objet de la présente invention, il y a les hydrocolloïdes polymériques d'origine végétale ou biosynthétique, comme par exemple la gomme de xanthane, la gomme de karaya, les carraghénates, les alginates, les galactomannanes, la cellulose et ses dérivés ; l'amidon et ses dérivés hydrophiles ; les polymères préparés à partir d'acide acrylique et/ou de ses dérivés, d'acrylamide et/ou de ses dérivés, d'acide méthacrylique et/ou de ses dérivés, d'alcool vinylique et/ou ses dérivés.

Comme exemple d'inhibiteurs d'argile optionnellement présents dans la composition aqueuse (C₁), mise en oeuvre dans le procédé objet de la présente invention, il y a les polyéthylènes glycols de poids moléculaires compris entre 400 g.mol⁻¹ et 10 000 g.mol⁻¹, les polyglycérols, des alcools alcoxylés comme par exemple le butanol éthoxylé commercialisé par la société Uniqema sous le nom de marque Kemelix™ 7423X.

Comme exemple de lubrifiants optionnellement présents dans la composition aqueuse (C₁), mise en oeuvre dans le procédé objet de la présente invention, il y a les huiles végétales éthoxylées, comme par exemple les huiles de colza éthoxylées commercialisées sous le nom de marque SEPITER™030, SEPITER™100, SEPITER™200 et SEPITER™300 par la société SEPPIC ; les esters méthyliques d'acides gras éthoxylés ; les savons d'acides gras comme par exemple le stéarate de sodium.

L'invention a aussi pour objet un procédé de forage tel que défini précédemment, dans lequel ladite étape d'évacuation est précédée par, ou conduite simultanément à, une étape de fracturation de la roche par projection dudit fluide de forage sous forme de mousse.

Selon cet aspect particulier de la présente invention, la composition aqueuse (C₁) telle que définie précédemment comprend généralement des ingrédients utilisés pour la préparation de fluides de fracturation de la roche dans des procédés de forage pétroliers et/ou gazeux, comme par exemple du sable, des billes de verre, des coquilles de noix.

Le fluide aqueux mis en oeuvre dans cet aspect particulier du procédé objet de la présente invention est préparé au niveau de la tête de puits au moyen d'un dispositif adapté. La mousse obtenue est alors introduite sous haute pression dans le puits et projetée sur la formation rocheuse à fracturer. A l'issue de cette introduction, le puits est fermé jusqu'à obtention d'une pression stable à l'intérieur du puits. Le puits est ensuite ouvert pour permettre la diminution progressive de la pression à l'intérieur du puits, impliquant alors la remontée en surface de la mousse qui entraine avec elle les déblais de roche générés par l'étape de fracturation précédente, qui sont alors ultérieurement séparés de la mousse pour être évacués.

La mousse du fluide aqueux mis en oeuvre dans le procédé objet de la présente invention est stable présente des caractéristiques mécaniques améliorées. La stabilité et les caractéristiques mécaniques des mousses sont évaluées respectivement par la mesure du temps de demi-vie et par la mesure de la consistance desdites mousses. Le temps de demi-vie est le temps au bout duquel la mousse obtenue à partir d'un certain volume de solution moussante s'est essoré d'une quantité de solution correspondant à la moitié du volume initial de la solution. La consistance de la mousse est exprimée par une valeur relative obtenue en mesurant les caractéristiques rhéologies de la mousse à l'aide d'un viscosimètre à disque tournant. Les exemples suivants illustrent l'invention, sans toutefois la limiter.

### 1) Préparation de compositions moussantes

### 1.1) Préparation d'une solution comprenant du N-cocoylglutamate disodique (Composition X₁).

On introduit dans un réacteur, sous agitation et à une température de 20°C, 21,1 kilogrammes d'un mélange eau-acétone (ratio massique eau/acétone : 7/3), 7,0 kilogrammes de glutamate de sodium monosodique monohydraté, puis 5,6 kilogrammes d'une solution aqueuse de soude à 25% massique de façon à atteindre un pH égal à 12.

On ajoute ensuite progressivement sous agitation 6,9 kilogrammes de chlorure de cocoyle, et 5,4 kilogrammes supplémentaires de la solution de soude pour maintenir le pH à 12. On maintient la température entre 20°C et 30°C, puis on fait décroitre le pH jusqu'à 2 en ajoutant 15,6 kilogrammes d'une solution aqueuse d'acide sulfurique à 30% massique. La phase aqueuse acide est alors séparée du solide obtenu et celui-ci est lavé abondamment à l'eau. Le solide humide obtenu est enfin solubilisé dans 8,3 kilogrammes d'une solution de soude à 25% additionnée de 8,2 kilogrammes d'eau. La solution de N-cocoylglutamate disodique (Composition X₁) ainsi obtenue est vidangée dans des fûts.

### 1.2) Préparation d'une solution comprenant du N-cocoylglutamate, du N-cocoylaspartate et du N-cocoylglycinate (Composition X₂).

On prépare un solution aqueuse à 23% massique d'un équivalent molaire d'un mélange d'acides aminés comprenant, pour 100 % de sa masse, 88,7% massique d'acide aspartique, 4,9 % massique d'acide glutamique et 6,4 % massique de glycine introduit dans un réacteur, sous agitation et à une température de 20°C. On ajuste le pH à 9,8 en ajoutant ensuite une solution aqueuse de soude.

On ajoute ensuite progressivement sous agitation 0,8 équivalent molaire de chlorure de cocoyle, et de la solution de soude pour maintenir le pH entre 9,5 et 10. On obtient ainsi la solution du mélange de N-cocoylglutamate de sodium, de N-cocoylaspartate de sodium et de N-cocoylglycinate de sodium attendue (Composition X₂).

Les caractéristiques analytiques des compositions (X₁) et (X₂) sont consignées dans le tableau 1 ci-dessous (les pourcentages sont des pourcentages massiques).

**Tableau 1**

| | **Méthode** | **(X₁)** | **(X₂)** |
|---|---|---|---|
| Aspect à 20°C | Méthode visuelle | Liquide limpide | Liquide limpide |
| Teneur en eau (a) | Norme NFT 73-201 | 74,5 % | 68,4 % |
| Extrait Sec (b) | Thermo-balance, 105°C, 100 minutes | 26,1 % | 31,6 % |
| Acide dodécanoïque résiduel (c) | chromatographie en phase gazeuse | 1,5% | 2,8 % |
| Teneur en sodium (%) | Absorption atomique | 3,00 % | Non mesurée |
| Teneur en composés de formule (I) | (b) - (c) | 24,6% | 28,8% (dont 1% environ de cocoyl glycinate) |
| Chlorures | Potentiométrie au nitrate d'argent | 0,01% | 2,45 % |
| pH produit | pH-mètre | 6,6 | 9,5 |

### 1.3) Préparation d'une composition moussante (X₃) selon l'état de la technique en présence de stabilisants de mousse

Une composition (X₃) est préparée par simple mélange à une température de 20°C des ingrédients suivants :
- Hexadécanol : 1,8%
- Lauryl amine : 0,3%
- Butyl Glycol : 11,2%
- Isobutanol : 6,1%
- Lauryl ether sulphate de sodium C10-C12 + 1 OE : 16,0%
- Lauryl ether sulphate de sodium C12-C16 + 2,2 OE : 12,4%
- Eau qs 100%.

La composition (X₃) ainsi préparée comprend une teneur de 28,4% massique d'agents moussant (Lauryl ether sulphate de sodium C10-C12 + 1 OE et Lauryl ether sulphate de sodium C12-C16 + 2,2 OE) ainsi qu'un système de stabilisation de mousse constitué par l'hexadécanol et la lauryl amine. Le ratio massique (Lauryl ether sulphate de sodium C10-C12 + 1 OE)/( Lauryl ether sulphate de sodium C12-C16 + 2,2 OE) est égal à 1,29 ; la teneur en matière active tensioactive, constituée par le lauryl ether sulphate de sodium C10-C12 + 1 OE et par le lauryl ether sulphate de sodium C12-C16 + 2,2 OE est de 28,4% massique.

### 1.4) Préparation d'une composition moussante (X₄) selon l'état de la technique sans stabilisants de mousse.

Une composition (X₄), dépourvue d'ingrédients stabilisateurs de mousse, est préparée par simple mélange à une température de 20°C des ingrédients suivants :
- Lauryl ether sulphate de sodium C10-C12 + 1 OE 23,8%
- Lauryl ether sulphate de sodium C12-C16 + 2,2 OE 18,5%
- Eau qs 100%.
Le ratio massique (Lauryl ether sulphate de sodium C10-C12 + 1 OE)/( Lauryl ether sulphate de sodium C12-C16 + 2,2 OE) est égal à 1,29 ; la teneur en matière active tensioactive, constituée par le lauryl ether sulphate de sodium C10-C12 + 1 OE et par le lauryl ether sulphate de sodium C12-C16 + 2,2 OE, est de 42,3% massique.

### 2) Evaluation des propriétés moussantes des compositions (X₁), (X₂), (X₃), (X₄), (X₅) et (X₆).

On prépare des solutions aqueuses de façon à obtenir des solutions à 0,6% massique en matière active tensioactive dans de l'eau dure OMS, à partir des compositions (X₁), (X₂), (X₃) et (X₄). Pour un volume de 1 litre, l'eau dure OMS est constituée de :
- 0,304 grammes de chlorure de calcium anhydre
- 0,139 grammes de chlorure de magnésium hexahydrate
- Qs 1 litre d'eau permutée.
L'eau dure OMS correspond à un titre de 34°Th.

On prépare de mêmes solutions aqueuses (de l'état de la technique), avec 0,6% massique en matière tensioactives à partir d'alkyl polyglucosides dont la chaine alkyle comportant de 8 à 10 atomes de carbone (X₅) et à partir d'alkyl polyglucosides dont la chaine alkyle comportant de 10 à 14 atomes de carbone (X₆).

### 2.1) Principe de la méthode d'évaluation de la durée de demi-vie et de la consistance d'une mousse

L'évaluation de la durée de demi-vie et de la consistance d'une mousse est réalisée par formation d'une mousse, à partir d'une solution d'eau dure OMS comprenant une teneur de 0,6% massique de tensioactifs moussants, par agitation mécanique à une température de 20°C.

### 2.2) Protocole expérimental

On pèse avec précision dans un bêcher de 50 cm³ la quantité nécessaire de la composition à tester de façon à obtenir une solution de 0,6 % massique de tensioactifs moussants, présents dans la composition à tester, dans une solution de 250 cm³ d'eau dure OMS. On ajoute ensuite une portion d'eau dure OMS dans le bêcher de 50 cm³ comprenant la composition à tester et on agite manuellement et lentement de façon à solubiliser la composition à tester dans l'eau dure OMS. Le contenu du bêcher de 50 mL est versé dans un bêcher gradué de 500 cm³, et on complète par ajout d'eau dure OMS de façon à atteindre le trait de jauge de 250 cm³. L'agitation des solutions présentes dans le bêcher de 500 cm³ est mise en oeuvre par l'intermédiaire d'un moteur de laboratoire Rayneri (modèle 33/300) équipé d'une pale papillon à trois branches creuses (diamètre 80 mm). La pale est placée à quelques millimètres du fond du bêcher contenant la solution des compositions à tester dans l'eau dure OMS et est actionnée avec une vitesse constante de 3 000 t/min pendant deux minutes.

### 2.3- Expression des résulats

Pour chaque essai, les paramètres suivants sont mesurés :
✔ Temps de foisonnement (**T**_{fois}): il s'agit de la durée d'agitation au bout de laquelle on observe la suppression du vortex dans le bêcher. Au delà de ce temps, la mousse entoure totalement la tige de la pâle et son niveau est horizontal.
✔ Temps de demi-vie (**T**_{1/2}) : il s'agit du temps au bout duquel la mousse obtenue à partir d'un certain volume de solution moussante, s'est essorée d'une quantité de solution correspondant à la moitié du volume initial. Pour ce test, le temps de demi-vie est atteint lorsque le niveau supérieur de l'eau d'essorage atteint le repère des 125 cm³ sur le bêcher.
✔ Hauteur mousse générée par l'agitation (**H**ₜₒ) : il s'agit de la hauteur de mousse générée à la fin des deux minutes d'agitation.
✔ Hauteur de mousse résiduelle après 30 minutes (**H**ₜ₃₀) : il s'agit de la hauteur de mousse observée après une durée de 30 minutes suivant la fin de l'agitation de deux minutes.
✔ La différence (Δ**H**) entre **H**ₜₒ et **H**ₜ₃₀ permet d'évaluer comparativement la qualité des mousses générées par les différents tensioactifs.
✔ Consistance de la mousse : il s'agit de la valeur de viscosité mesurée sur la mousse générée à un temps déterminé, à l'aide d'un viscosimètre Rhéovisco RV 8 équipé du module à disque tournant N°3.

### 2.4- Résultats obtenus

Les résultats obtenus pour les solutions à 0,6% massique de tensioactifs moussants dans l'eau dure OMS pour les compositions (X₁), (X₂), (X₃) (X₄), (X₅) et (X₆) sont indiqués dans le tableau 2 ci-après.

**Tableau 2**

| | | | | | | Viscosité en mPas | | |
|---|---|---|---|---|---|---|---|---|
| | (T_{fois}) | (T_{1/2}) | (Hₜₒ) | (Hₜ₃₀) | (ΔH) | à t = o | à t = 30 min | à (T_{1/2}) |
| (X₁) | 8s | 4.000s | 160 cm | 160 cm | 0 cm | 9.610 | 12.930 | 15.880 |
| (X₂) | 8s | 3.050s | 160 cm | 155 cm | 5 cm | 8.920 | 7.590 | 8.190 |
| (X₃) | 8s | 2.100s | 180 cm | 170 cm | 10 cm | 3.400 | 8.200 | 8.300 |
| (X₄) | 8s | 350s | 200 cm | 160 cm | 40 cm | 910 | 3.200 | 800 |
| (X₅) | 8s | 600s | 190 cm | 155 cm | 35 cm | 2.000 | 1.900 | 1.700 |
| (X₆) | 14s | 600s | 175 cm | 150 cm | 25 cm | 2.500 | 2.600 | 1.800 |

### 2.5 - Analyses des résultats

Les résultats exposés dans le tableau précédent font apparaître les mousses obtenues à partir de la composition (X₁), comprenant un N-cocoyl glutamate disodique et en absence d'agents stabilisant de mousse, et à partir de la composition (X₂), comprenant un mélange de N-cocoyl glutamate, de N-cocoyl aspartate et de N-cocoyl glycinate, montrent une stabilité améliorée et de meilleures propriétés mécaniques que la composition (X₃), comprenant des tensioactifs moussants et des agents de stabilisation de mousse, que la composition (X₄), comprenant des tensioactifs moussants sans agents d'agents stabilisants de mousse et que les compositions (X₅) et (X₆) à bases d'alkyl polyglucosides, utilisées dans les procédés de forage de l'état de la technique.

## Revendications

1. Procédé de forage de cavités dans des formations souterraines comprenant une étape d'évacuation des déblais de forage mettant en oeuvre un fluide aqueux sous forme d'une mousse obtenu par mélange :
- D'une composition aqueuse (C₁) comprenant pour 100% massique :
- De 0,5% massique à 25% massique d'un composé de formule (I) :
R₁-C(O)-NH-CH(COOM)-(CH₂)ₙ-COOM' (I)
dans laquelle n représente un nombre entier égal à 1 ou 2, R₁ représente un radical hydrocarboné aliphatique, linéaire ou ramifié, saturé ou insaturé, comportant de huit à dix-huit atomes de carbone, M représente un cation monovalent et M', identique à, ou différent de M, représente un atome d'hydrogène ou un cation monovalent ; ou d'un mélange de composés de formule (I), et
- De 75% à 99,5% massique d'eau,
- Avec un gaz ou un mélange de gaz, choisi parmi l'air, l'azote ou dioxyde de carbone.

2. Procédé tel que défini à la revendication 1, **caractérisé en ce que** dans la formule (I) n est égal à 1.

3. Procédé tel que défini à la revendication 1, **caractérisé en ce que** dans la formule (I), n est égal à 2.

4. Procédé tel que défini à l'une quelconque des revendication 1 à 3, **caractérisé en ce que** la composition aqueuse (C₁) comprend une proportion non nulle d'au moins un composé de formule (I), dans laquelle n est égal à 1 et une proportion non nulle d'au moins un composé de formule (I), dans laquelle n est égal à 2.

5. Procédé tel que défini à l'une quelconque des revendications 1 à 4, **caractérisé en ce que** dans la formule (I), le radical R₁ représente un radical alkyle choisi parmi les radicaux heptyle, nonyle, undécyle, tridécyle ou pentadécyle.

6. Procédé tel que défini à l'une quelconque des revendications 1 à 5, pour lequel la composition aqueuse (C₁) comprend pour 100% massique :
- De 0,5% massique à 25% massique d'un mélange de composés de formule (I) :
R₁-C(O)-NH-CH(COOM)-(CH₂)ₙ-COOM' (I)
ledit mélange étant obtenu par acylation d'un composé de formule (II) :
NH₂-CH(COOM)-(CH₂)ₙ-COOM' (II)
dans laquelle n représente un nombre entier égal à 1 ou 2, M représente un cation monovalent et M', identique à, ou différent de M, représente un atome d'hydrogène ou un cation monovalent, avec un mélange d'acides gras issus de l'huile de coco ou par un mélange de dérivés activés des dits acides ; et
- De 75% à 99,5% massique d'eau.

7. Procédé tel que défini à l'une ou quelconque des revendications 1 à 6, **caractérisé en ce que** dans la formule (I), M représente un atome de sodium ou de potassium et M' représente un atome d'hydrogène.

8. Procédé tel que défini à l'une ou quelconque des revendications 1 à 6, **caractérisé en ce que** dans la formule (I), M et M' représentent un atome de sodium ou un atome de potassium.

9. Procédé tel que défini à la revendication 7, pour lequel le mélange de composés de formule (I) est choisi parmi le mono-sel de sodium ou de potassium de l'acide N-cocoyl glutamique, ou le mono-sel de sodium ou de potassium de l'acide N-cocoyl aspartique.

10. Procédé tel que défini à la revendication 8, pour lequel le mélange de composés de formule (I) est choisi parmi le di-sel de sodium ou de potassium de l'acide N-cocoyl glutamique, ou le di-sel de sodium ou de potassium de l'acide N-cocoyl aspartique.

11. Procédé tel que défini à l'une ou quelconque des revendications 1 à 10, **caractérisé en ce que** la composition aqueuse (C₁) comprend en outre, pour 100% de sa masse, de 0,5% massique à 15% massique et plus particulièrement de 0,5% massique à 10% massique, d'au moins un tensioactif différent du composé de formule (I), choisi parmi les tensioactifs non-ioniques, les tensioactifs anioniques, les tensioactifs cationiques et les tensioactifs amphotères, étant entendu que la proportion massique totale en ledit tensioactif différent du composé de formule (I) est inférieure à la proportion massique totale en ledit composé de formule (I).

12. Procédé tel que défini à la revendication 11, **caractérisé en ce que** la composition aqueuse (C₁) comprend en outre, pour 100% de sa masse, de 0,5% massique à 10% massique de N-cocoyl glycine ou de N - dodécanoyl glycine.

13. Procédé de forage tel que défini à l'une des revendications 1 à 12, dans lequel ladite étape d'évacuation est précédée par, ou conduite simultanément à une étape de fracturation de la roche par projection dudit fluide de forage sous forme de mousse.

## Patentansprüche

1. Verfahren zum Bohren von Hohlräumen in unterirdischen Formationen, umfassend einen Schritt des Abförderns des Bohrabraums durch Verwendung eines wässrigen Fluids in Form eines Schaums, der erhalten wird durch Mischen:
- einer wässrigen Zusammensetzung (C₁), die pro 100 Massen-% Folgendes enthält:
- 0,5 Massen-% bis 25 Massen-% einer Verbindung der Formel (I):
R₁-C(O)-NH-CH(COOM)-(CH₂)ₙ-COOM' (I)
worin n eine ganze Zahl gleich 1 oder 2 darstellt, R₁ ein lineares oder verzweigtes, gesättigtes oder ungesättigtes aliphatisches Kohlenwasserstoffradikal mit acht bis achtzehn Kohlenstoffatomen darstellt, M ein einwertiges Kation darstellt und M', das mit M identisch oder davon verschieden ist, ein Wasserstoffatom oder ein einwertiges Kation darstellt; oder eines Gemischs aus Verbindungen der Formel (I) und
- 75 Massen-% bis 99,5 Massen-% Wasser,
- mit einem Gas oder einem Gasgemisch, das ausgewählt ist aus Luft, Stickstoff oder Kohlendioxid.

2. Verfahren nach Anspruch 1, **dadurch gekennzeichnet, dass** in der Formel (I) n gleich 1 ist.

3. Verfahren nach Anspruch 1, **dadurch gekennzeichnet, dass** in der Formel (I) n gleich 2 ist.

4. Verfahren nach einem der Ansprüche 1 bis 3, **dadurch gekennzeichnet, dass** die wässrige Zusammensetzung (C₁) einen Anteil ungleich null mindestens einer Verbindung der Formel (I) enthält, worin n gleich 1 ist, und einen Anteil ungleich null mindestens einer Verbindung der Formel (I) enthält, worin n gleich 2 ist.

5. Verfahren nach einem der Ansprüche 1 bis 4, **dadurch gekennzeichnet, dass** in der Formel (I) das Radikal R₁ ein Alkylradikal darstellt, das ausgewählt ist aus den Heptyl-, Nonyl-, Tridecyl- oder Pentadecyl-Radikalen.

6. Verfahren nach einem der Ansprüche 1 bis 5, bei dem die wässrige Zusammensetzung (C₁) pro 100 Massen-% Folgendes enthält:
- 0,5 Massen-% bis 25 Massen-% eines Gemischs aus Verbindungen der Formel (I):
R₁-C(O)-NH-CH(COOM)-(CH₂)ₙ-COOM' (I)
wobei das Gemisch erhalten wird durch Acylierung einer Verbindung der Formel (II):
NH₂-CH(COOM)-(CH₂)ₙ-COOM' (II)
worin n eine ganze Zahl gleich 1 oder 2 darstellt, M ein einwertiges Kation darstellt und M', das mit M identisch oder davon verschieden ist, ein Wasserstoffatom oder ein einwertiges Kation darstellt, mit einem Gemisch aus Fettsäuren, die aus Kokosöl oder durch ein Gemisch aus aktivierten Derivaten der Säuren hervorgegangen sind; und
- 75 Massen-% bis 99,5 Massen-% Wasser.

7. Verfahren nach einem der Ansprüche 1 bis 6, **dadurch gekennzeichnet, dass** in der Formel (I) M ein Natrium- oder Kaliumatom darstellt und M' ein Wasserstoffatom darstellt.

8. Verfahren nach einem der Ansprüche 1 bis 6, **dadurch gekennzeichnet, dass** in der Formel (I) M und M' ein Natriumatom oder ein Kaliumatom darstellen.

9. Verfahren nach Anspruch 7, bei dem das Gemisch aus Verbindungen der Formel (I) ausgewählt ist aus Natrium-Monosalz oder Kalium-Monosalz der N-cocoyl-Glutaminsäure oder Natrium-Monosalz oder Kalium-Monosalz der N-cocoyl-Asparaginsäure.

10. Verfahren nach Anspruch 8, bei dem das Gemisch aus Verbindungen der Formel (I) ausgewählt ist aus Natrium-Disalz oder Kalium-Disalz der N-cocoyl-Glutaminsäure oder Natrium-Disalz oder Kalium-Disalz der N-cocoyl-Asparaginsäure.

11. Verfahren nach einem der Ansprüche 1 bis 10, **dadurch gekennzeichnet, dass** die wässrige Zusammensetzung (C₁) ferner pro 100 % ihrer Masse 0,5 Massen-% bis 15 Massen-% und insbesondere 0,5 Massen-% bis 10 Massen-% mindestens ein von der Verbindung der Formel (I) verschiedenes Tensid enthält, das ausgewählt ist aus den nichtionischen Tensiden, den aniodischen Tensiden, den kationischen Tensiden und den amphoteren Tensiden, wobei der Gesamtmassenanteil des von der Verbindung der Formel (I) verschiedenen Tensids kleiner als der Gesamtmassenanteil in der Verbindung der Formel (I) ist.

12. Verfahren nach Anspruch 11, **dadurch gekennzeichnet, dass** die wässrige Zusammensetzung (C₁) ferner pro 100 % ihrer Masse 0,5 Massen-% bis 10 Massen-% N-cocoyl-Glycin oder N-dodecanoyl-Glycin enthält.

13. Bohrverfahren nach einem der Ansprüche 1 bis 12, bei dem dem Schritt des Abförderns ein Schritt des Zertrümmerns des Gesteins durch Verspritzen des Bohrfluids in Form von Schaum vorangeht oder mit diesem gleichzeitig durchgeführt wird.

## Claims

1. Method for drilling cavities in subterranean formations comprising a step of carrying away the drill cuttings using an aqueous fluid in the form of a foam, obtained by mixing:
- an aqueous composition (C₁) comprising, for 100 % by weight:
- from 0.5 % by weight to 25 % by weight of a compound of formula (I):
R₁-C(O)-NH-CH(COOM)-(CH₂)ₙ-COOM' (I)
wherein n represents an integer equal to 1 or 2, R₁ represents a saturated or unsaturated, linear or branched, aliphatic hydrocarbon radical comprising from 8 to 18 carbon atoms, M represents a monovalent cation and M', which is identical to or different from M, represents a hydrogen atom or a monovalent cation; or a mixture of compounds of formula (I), and
- from 75 % to 99.5 % by weight of water,
- with a gas or a mixture of gases, selected from air, nitrogen or carbon dioxide.

2. Method according to claim 1, **characterised in that** in the formula (I), n is equal to 1.

3. Method according to claim 1, **characterised in that** in the formula (I), n is equal to 2.

4. Method according to any of claims 1 to 3, **characterised in that** the aqueous composition (C₁) comprises a non-zero proportion of at least one compound of formula (I), wherein n is equal to 1, and a non-zero proportion of at least one compound of formula (I), wherein n is equal to 2.

5. Method according to any of claims 1 to 4, **characterised in that**, in the formula (I), the radical R₁ represents an alkyl radical selected from heptyl, nonyl, undecyl, tridecyl or pentadecyl radicals.

6. Method according to any of claims 1 to 5, for which the aqueous composition (C₁) comprises, for 100 % by weight:
- from 0.5 % by weight to 25 % by weight of a mixture of compounds of formula (I):
R₁-C(O)-NH-CH(COOM)-(CH₂)ₙ-COOM' (I)
said mixture being obtained by acylation of a compound of formula (II):
NH₂-CH(COOM)-(CH₂)ₙ-COOM' (II)
wherein n represents an integer equal to 1 or 2, M represents a monovalent cation and M', which is identical to or different from M, represents a hydrogen atom or a monovalent cation, with a mixture of fatty acids derived from coconut oil or with a mixture of activated derivatives of said acids; and
- from 75 % to 99.5 % by weight of water.

7. Method according to any of claims 1 to 6, **characterised in that**, in the formula (I), M represents a sodium or potassium atom and M' represents a hydrogen atom.

8. Method according to any of claims 1 to 6, **characterised in that**, in the formula (I), M and M' represent a sodium atom or a potassium atom.

9. Method according to claim 7, for which the mixture of compounds of formula (I) is selected from the monosodium salt or monopotassium salt of N-cocoyl glutamic acid, or the monosodium salt or monopotassium salt of N-cocoyl aspartic acid.

10. Method according to claim 8, for which the mixture of compounds of formula (I) is selected from the disodium salt or dipotassium salt of N-cocoyl glutamic acid, or the disodium salt or dipotassium salt of N-cocoyl aspartic acid.

11. Method according to any of claims 1 to 10, **characterised in that** the aqueous composition (C₁) further comprises, for 100 % of its weight, from 0.5 % by weight to 15 % by weight and more particularly from 0.5 % by weight to 10 % by weight, of at least one surfactant which is different from the compound of formula (I), selected from non-ionic surfactants, anionic surfactants, cationic surfactants and amphoteric surfactants, it being understood that the total proportion by weight of said surfactant which is different from the compound of formula (I) is less than the total proportion by weight of said compound of formula (I).

12. Method according to claim 11, **characterised in that** the aqueous composition (C₁) further comprises, for 100 % of its weight, from 0.5 % by weight to 10 % by weight of N-cocoyl glycine or of N-dodecanoyl glycine.

13. Drilling method according to any of claims 1 to 12, wherein said step of carrying away is preceded by, or carried out at the same time as, a step of fracturing the rock by spraying said drilling fluid in the form of foam.
